# EUROPEAN PATENT SPECIFICATION

(11) **EP 4 623 214 B1**
(45) Date of publication and mention of the grant of the patent: **29.07.2026**
(21) Application number: 22868414.8
(22) Date of filing: 30.12.2022
(51) Int. Cl.: F16C 17/06, F16C 23/02

(54) **THRUST BEARING ASSEMBLIES AND RELATED METHODS**
DRUCKLAGERANORDNUNGEN UND ZUGEHÖRIGE VERFAHREN
ENSEMBLES PALIERS DE BUTÉE ET PROCÉDÉS ASSOCIÉS

(43) Date of publication of application: 01.10.2025
(73) Proprietor: GE Vernova Technology GmbH, 5400 Baden (CH)
(72) Inventor: NUÑEZ, Luis Antonio, Queretaro, 76146 (MX); MUNKRES, Chad D, Schenectady, New York 12345-6000 (US)
(74) Representative: Wesela-Bauman, Grzegorz
(86) International application number: PCT/EP2022/088092
(87) International publication number: WO 2024/141162

(56) References cited:
- DE-C2- 10 059 196
- US-A- 1 425 979
- US-A- 3 160 450
- US-A- 4 099 802

## Description

### FIELD

The present disclosure relates to thrust bearing assemblies, and to turbomachinery, turbines and other rotating equipment including thrust bearing assemblies. The present disclosure also relates to methods for installing thrust bearing assemblies on a rotatable shaft.

### BACKGROUND

Modern steam turbines are used in a wide variety of applications, such as in power plants and in industrial locations. They may drive an electric generator to provide electric power as needed. In operation, modern steam turbines may generate an axial load ("thrust") in addition to the torque of the rotor stages. The same phenomenon is known to occur in other turbomachinery.

For this reason, turbomachinery, such as e.g., steam turbine systems may include a thrust bearing to axially support a rotor shaft. During rotation of the rotor shaft, an axial force may be exerted by the rotor shaft on the thrust bearing that is configured to maintain the axial position of the shaft.

To this end, thrust bearings are generally anchored to a foundation of the turbine, allowing shaft rotation and absorbing axial loads. Thrust bearings generally comprise a plurality of pads or shoes that are arranged adjacent to a thrust collar mounted on or integral to the rotating shaft. In operation, a thin air/oil film may be formed between the pads and the thrust collar, avoiding direct contact between these components. A low-friction rotational coupling can thereby be established between the thrust bearing and the thrust collar.

Thrust bearings that are installed on high-speed rotating shafts and on shafts and which are subjected to relatively high thrust may suffer wear, particularly in high-temperature conditions. This can be further accentuated or aggravated in case of misalignment of the shaft or in scenarios wherein the thrust is non-uniform around the shaft or wherein temperature distribution is not uniform. In operation, the thrust loads are not necessarily symmetrical around the shaft and thus a bending moment can occur which acts on the rotating components of the equipment. This can lead to increased wear at specific contact points.

Thrust bearings comprising mechanical couplings between thrust pads to compensate to some extent for misalignment and non-uniformity are known but they are rather complex, leading to increased manufacturing and maintenance costs. Such mechanical arrangements in any case may not be efficient in load transmission and may have limited capability to handle misalignment depending on the mechanical arrangement and geometry of the parts.

US 3 160 450 A discloses a thrust bearing assembly according to the preamble of claim 1. DE 100 59 196 C2 discloses a method for installing a different thrust bearing assembly on a rotatable shaft.

The present disclosure provides thrust bearing assemblies that at least partially overcome some of the aforementioned drawbacks.

### SUMMARY

In an aspect of the present disclosure, a thrust bearing assembly for a rotating machine is provided. The thrust bearing assembly includes a plurality of thrust pads configured to support an axial load of a collar mounted on a shaft of the rotating machine. The plurality of thrust pads may be distributed circumferentially around the shaft. The assembly also includes a structural base configured to carry the thrust pads and to surround the shaft. A plurality of pad actuators is configured to position the thrust pads, for example, along a direction that is substantially parallel to a rotational axis of the shaft. The thrust bearing assembly further comprises a hydraulic system for transferring the axial load between the thrust pads. In embodiments, said hydraulic system can be a hydraulic equalizing system.

The hydraulic system includes, in an example not being part of the current invention, one cavity for a hydraulic fluid and said cavity is connected to the plurality of pad actuators. The hydraulic fluid within the cavity allows for exchanging of the axial load between the thrust pads using hydraulic pressure of the hydraulic fluid.

According to the invention, the hydraulic system comprises a plurality of cavities for the hydraulic fluid and said plurality of cavities is connected to the plurality of pad actuators and the plurality of cavities is hydraulically connected for exchanging of pressure generated by the hydraulic fluid in the cavities. In a variation of this embodiment, each actuator has its own cavity which exchanges the axial load using the hydraulic fluid with other cavities and thus with other actuators and so with other thrust pads.

The hydraulic fluid to control pad actuators improves the capability to correct collar misalignments. If a misalignment occurs, the axial load on one or more of the pads of the thrust bearing assembly may increase, which in turn increases the pressure in the corresponding hydraulic cavity or cavities. Within a single cavity a pressure is distributed among the thrust pads. For the case of plurality of cavities, the pressure increase will be distributed using hydraulic connections, for example conduits or membranes, to adapt the position of the pads and so to adapt to the axial loads and the misalignment. Transmission of axial loads to the thrust bearing (and the fixed anchoring structure also known as a stationary structure to which it may be connected) thereby can remain efficient. Hydraulic systems are also less prone to friction losses and wear than prior art mechanical systems for positioning the pads. Thus, examples of thrust pad assemblies according to this aspect can provide higher efficiency than prior art assemblies and reduce wear of thrust bearing assemblies. The hydraulic system also does not lose mechanical leverage which many prior art leveling solutions do. The fixed anchoring (stationary structure) can include any non-rotating component through which the load is transferred from the thrust bearing ultimately to the foundation. The stationary structure can include a foundation. For example, the thrust collar acts on the thrust bearing which acts on the (stationary) pedestal (bearing housing and shell support) which acts on the (stationary) shell, which acts on the anchoring pedestal which has keys and transmits the load to the foundation.

In one embodiment, the hydraulic connection between the cavities includes conduits for the hydraulic fluid and / or membranes. Said conduits are for transporting of fluid between the cavities which through pressure of said fluid will transport the axial load. The membranes in general are not transporting the fluid between the cavities, but will deform under the pressure exerted by the fluid. Through this deformation, the axial load is transmitted between the cavities. Said deformation is a function of fluid and of the material used for making the membrane. For the same fluid, different materials of the membrane may be used to either increase transmission of the axial load between the cavities or to decrease said transmission. This can be used to further adapt the assembly of the invention to a particular design of a rotating equipment, but also may be used to compensate for unwanted fluid behavior. For example, at certain loads, certain fluids may become compressible and thus not transport the axial load as efficiently. In such cases, one might use less rigid membranes which are more susceptible to changes in pressure.

According to the invention, the thrust pad actuator is a diaphragm. Pistons and diaphragms are simple and commercially readily available parts. It follows that these do not require special manufacturing. Pistons can be surrounded with cylinders to limit the movement of each piston to a direction that is substantially perpendicular to the thrust bearing assembly. The diaphragms are used with a cage or a ring that surrounds a thrust pad. The cage and the rings are to limit the movement of the thrust pad to a direction that is substantially perpendicular to the thrust bearing assembly.

The thrust bearing assembly of the invention can be used in various steam turbines and gas turbines. As the result, in an aspect, various types of power plants can benefit from said thrust bearing assembly. Said types include, but are not limited to: fossil, renewable-energy, combine-cycle or nuclear powerplants.

Another aspect includes a use of the thrust bearing assembly of the invention to ensure a substantially uniform axial load distribution. This is specifically done without internal moving parts within the thrust bearing assembly. This eliminates friction problems observed in bearings, but also allows using materials with lower strength when compared to the materials used for bearings with mechanical load distribution systems.

In another aspect, a method for installing a thrust bearing assembly on a rotatable shaft is provided. The method comprises arranging a first annular base segment and a second annular base segment around the rotatable shaft and connecting the first annular base segment to the second annular base segment. Herein, the first and the second annular base segments carry one or more thrust pads configured to support an axial load of a collar mounted on the rotatable shaft, and the pad actuators are controlled by a hydraulic fluid in a hydraulic cavity, and configured to position the thrust pads along a direction that is substantially parallel to a rotational axis of the rotating shaft. The method further comprises connecting one or more of the hydraulic cavities of the first annular base segment to the hydraulic cavities of the second annular base segment through one or more hydraulic fluid conduits.

Throughout this disclosure, the term "thrust" or "thrust load" should be understood as an axial load in a direction of the rotational axis of a rotating shaft, resulting from a non-zero sum of local axial loads.

The terms "thrust pad", "pad" or "shoe" may be interchangeably used throughout the present disclosure.

Additional objects, advantages and features of embodiments of the present disclosure will become apparent to those skilled in the art upon examination of the description, or may be learned by practice.

### BRIEF DESCRIPTION OF THE DRAWINGS

Figure 1 schematically illustrates a cross-sectional side view of a typical double flow low-pressure (LP) steam turbine;
Figure 2 schematically illustrates a simplified side view of one example of a thrust bearing according to the present disclosure installed in a rotating shaft;
Figure 3 illustrates an example of a thrust bearing assembly according to the present disclosure;
Figure 4 illustrates the thrust bearing assembly of figure 3 in a different operational situation;
Figure 5 illustrates a further example of a thrust bearing assembly according to the present disclosure;
Figure 6 illustrates the thrust bearing assembly of figure 5 in a different operational situation;
Figure 7 illustrates yet a further example of a thrust bearing assembly according to the present disclosure;
Figure 8 shows a flowchart of an example of a method for installing a thrust bearing assembly in a rotating shaft according to the present disclosure.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope of the teaching. For instance, features illustrated or described as part of one embodiment can be used with another embodiment to yield a still further embodiment. The present disclosure is defined by the appended claims.

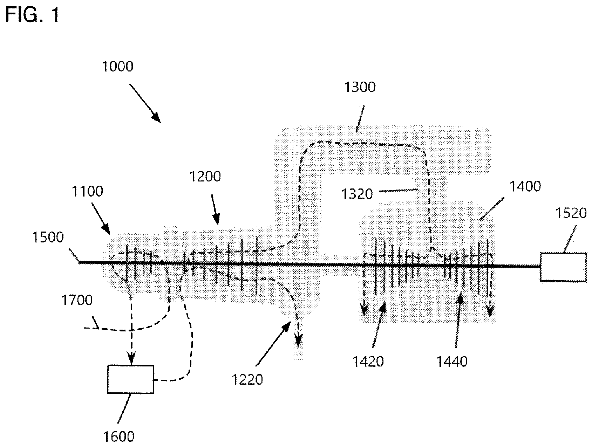

With reference to the drawings, figure 1 shows a cross-sectional side view of a typical double flow steam turbine 1000, comprising a high-pressure (HP) section 1100, an intermediate-pressure (IP) section 1200, a low-pressure (LP) shell 1400 housing a first LP section 1420 and a second LP section 1440, and a crossover pipe 1300 between IP section 1200 and LP sections 1420, 1440. Crossover pipe 1300 includes a feed 1320 to LP sections 1420, 1440. A generator 1520 is connected to a drive train 1500 extending through HP section 1100, IP section 1200, and LP sections 1420, 1440.

In other embodiments, the steam turbine 1000 can have a different flow. In other or same embodiments, the steam turbine 1000 includes a high-pressure (HP) section 1100 and a low-pressure section without an intermediate pressure section 1200. In other embodiments, the steam turbine 1000 includes only a high-pressure (HP) section 1100.

The steam turbine 1000 of figure 1 is also shown in conjunction with a reheater 1600 for reheating steam between HP section 1100 and IP section 1200, although other steam turbines may not include such a reheater. In embodiments, the reheater can be a moisture separator reheater (MSR). As can be seen in figure 1, steam flow 1700 enters HP section 1100, passes to reheater 1600, and into IP section 1200, with steam flow 1700 in HP section 1100 and IP section 1200 being in substantially opposite directions, i.e., relative to drive train 1500.

As steam flow 1700 exits IP section 1200, a portion of steam flow 1700 may be extracted through an extraction port 1220 for other uses. In order to secure an axial position of the shaft on which the different turbine sections are mounted, one or more thrust bearings may be used. The teachings of the present disclosure do not require a double flow low-pressure (LP) steam turbine. In other examples, other steam turbines or other turbomachinery such as industrial gas turbines or industrial steam turbines may be used.

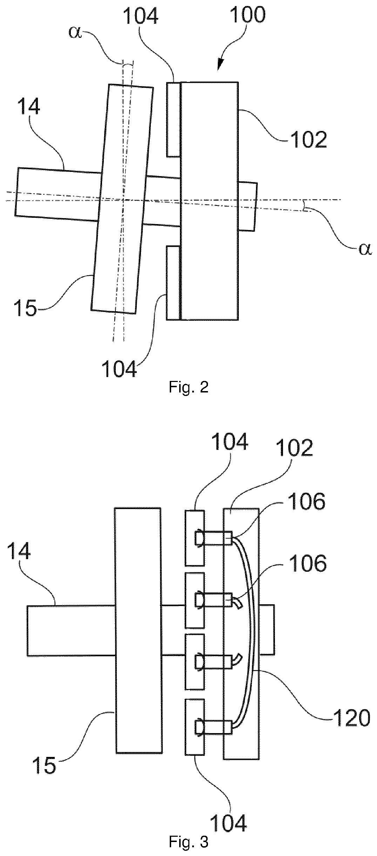

Figure 2 is a side view of a thrust bearing assembly 100 mounted on a rotating shaft 14 of a rotating machine. The rotating machine may be e.g. a steam turbine such as depicted in figure 1 or other turbomachinery.

The rotating shaft 14 runs through an open space defined by the thrust bearing assembly 100. The thrust bearing assembly 100 may be coupled to a fixed structure of a turbine, e.g. a bedplate, (not illustrated for reasons of simplicity) or may be anchored to another stationary component of the system. The thrust bearing assembly 100 may form a low friction rotational coupling with a thrust collar 15 of the rotating shaft 14 whereas, at the same time, it may ensure the axial position of the rotating shaft 14.

Thrust bearing assemblies 100 may be located at any point along the rotating shaft 14, but locations with relatively small oscillation amplitudes (perpendicular to the axis of rotation of the rotational shaft 14) are generally preferred. A thrust bearing assembly 100 might also be located between stages of a turbine 10. Alternatively, a thrust bearings assembly 100 may be located downstream of the stages of the turbine and upstream of the power generation unit.

Figure 2 also schematically illustrates that misalignment may occur in that a longitudinal axis of the shaft 14 does not coincide exactly with a geometric axis of the thrust bearing assembly 100. In the depicted example, a misalignment of angle *α* between the axes occurs. This may result in an unequal pressure distribution of the thrust collar 15 against the thrust bearing assembly 100, which at the same time may generate loss in efficiency and mechanical wear if this is not properly balanced.

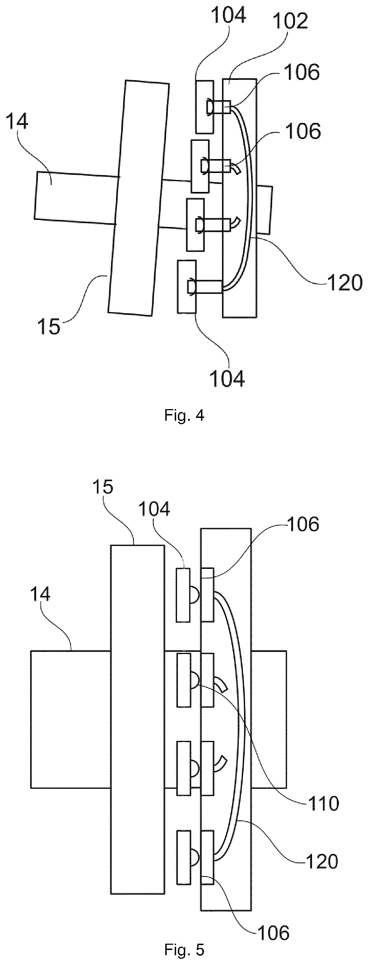

Figures 3 and 4 schematically illustrate a cross-section of an example of a thrust bearing assembly 100 according to the present disclosure in different operational situations. The first operational situation illustrated in figure 3 represents a scenario in which the thrust collar 15 of the rotating shaft 14 is aligned with the central axis of the thrust bearing assembly. The second operational situation in figure 4 represents a situation in which the thrust collar 15 of the rotating shaft 14 is not aligned with the central axis of the thrust bearing assembly. Thus, shaft 14 and the thrust collar 15 may be tilted an angle *α*.

The thrust bearing assembly 100 in figure 3 comprises a plurality of thrust pads 104 configured to support an axial load acting on the collar 15 mounted on the rotating shaft 14. The plurality of thrust pads 104 are distributed circumferentially around the rotating shaft 14. Note that in practice any other number of thrust pads 104 may be used, and particularly more than the four thrust pads 104 shown in figure 3 may be used.

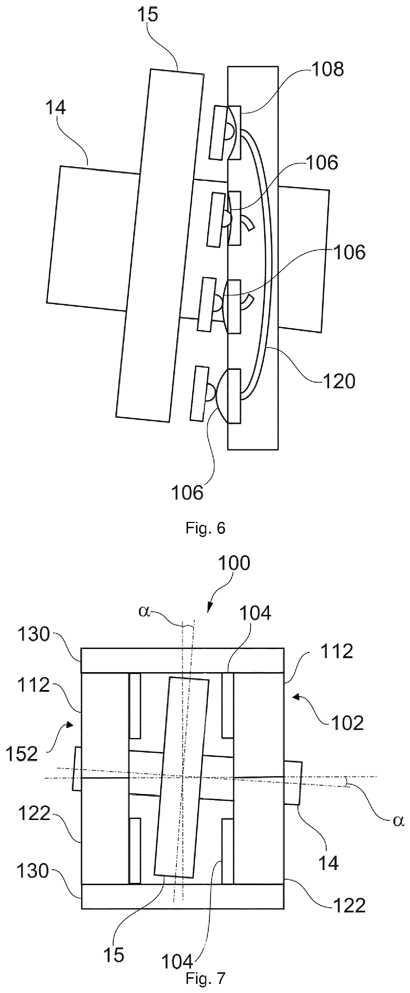

The thrust bearing assembly 100 also comprises a structural base 102 configured to carry the thrust pads 104. Further, the thrust bearing assembly 100 comprises a hydraulic equalizing system including plurality of pad actuators 106 controlled by a hydraulic fluid in a hydraulic cavity (illustrated in more detail in figures 5 and 6 with reference numeral 108), and configured to position the thrust pads 104 along a direction substantially parallel to a geometric centerline of the turbine, i.e. a direction substantially parallel to a rotational axis of the rotating shaft 14. The cavities are hydraulically connected for exchanging of pressure generated by the hydraulic fluid in the cavities and substantially equalizing the pressure in the different cavities. In the illustrated examples, the thrust bearing assembly 100 comprises one or more hydraulic fluid conduits 120 configured to connect the hydraulic cavities of at least two pad actuators 106. Instead of or in addition to the hydraulic fluid conduits 120, the hydraulic cavities can be separated with membranes. The membranes can include membranes that are not allowing fluid to move from one cavity to another. These particular membranes will deform and through this deformation transmit load between the cavities.

In the illustrated example, the pad actuators 106 are or comprise linear actuators, e.g. pistons, but other types of actuators may be used. This will be discussed in more detail in figures 5 and 6. In general, for clarity reasons Fig. 3-6 do not show that all cavities are connected together for exchange of pressure. This connection can be realized in many ways and, in principle, can be direct or indirect. An example of direct connection is when all cavities connected, for example, in a series. An example of an indirect connection is when all cavities are connected with a system that is external to them that will provide said exchange of pressure between the cavities.

Additionally, in some examples the hydraulic fluid may be a substantially incompressible fluid, e.g. an oil-based fluid. This may improve the pressure transmission between connected pad actuators 106 and increase stiffness under axial loads. Additionally, this will reduce the probability of axial vibrations.

Although not illustrated in figures 3 and 4, the hydraulic fluid conduits 120 may comprise security and/or control features generally included in hydraulic circuits. The security features may comprise one or more purge valves, overpressure valves, pressure sensors and others.

In examples, the thrust pads 104 may be made of steel faced with a tin-based babbitt metal (whitemetal). Alternative materials may be copper/chrome pads comprising a coating of babbitt, steel pads comprising a coating of aluminum tin, steel pads comprising a coating of polymer, solid polymer pads or steel pads comprising a coating of ceramic or cermet, among others.

Figures 5 and 6 schematically illustrate a cross-section of another example of a thrust bearing assembly according to the present disclosure in different operational situations. As discussed in relation with figures 3 and 4, the first operational situation in figure 5 represents a situation in which the shaft and thrust collar 15 are aligned with a central axis of the thrust bearing. The second operational situation in figure 6 represents a situation of misalignment.

In the illustrated example in figures 5 and 6, the pad actuators 106 are diaphragms. The diaphragms 106 are in fluid communication with respective hydraulic cavities 108 and may deform or expand/contract, e.g. outwardly and inwardly, depending on the fluid volume inside the cavities 108. Thus, in a situation as in figure 5, the hydraulic cavities 108 may comprise a substantially similar volume of fluid, and all the diaphragms 106 may be at substantially the same axial position relative to their respective cavities 108.

On the other hand, when the rotating shaft 14 is subjected to a non-axisymmetric load or other misalignment, some of the thrust pads 104 may perceive a higher pressure than others, and this may result in a diaphragm 108 adaptation, and a subsequent longitudinal displacement of the thrust pads 104 due to hydraulic fluid displacement from a first hydraulic cavity to a second hydraulic cavity of respective thrust pads 104.

As illustrated in the examples in figures 3 - 6, the thrust bearing assembly 100 may comprise hydraulic fluid conduits 120 configured to connect pairs of hydraulic cavities 108 of corresponding diametrically oppositely arranged pad actuators 106. Providing hydraulic fluid conduits 120 to transfer loads between diametrically oppositely arranged pad actuators 106 results in a substantially homogeneous pressure distribution, i.e. the pad actuators 106 receiving a greater axial force will retract towards the hydraulic cavity 108 whereas the diametrically oppositely arranged pad actuator 106 will advance towards the thrust collar 15. In addition, connecting pairs of pad actuators 106 allows designing pairs of thrust pads 104 and/or pairs pad actuators 106 according to different specifications. This may improve the overall efficiency of the assembly 100.

Further, in some examples, the thrust bearing assembly 100 may further comprise a plurality of pivots 110 configured to tilt the thrust pads 104 from an upright position. Thus, the pivots may allow the thrust pads to rotate about an axis substantially perpendicular to the rotational axis of the rotating shaft 14 to be substantially aligned with a contact face of the thrust collar 15, reducing contact stresses and associated wear and temperature gradients. This has been schematically illustrated in figure 6, wherein the thrust pads 104 and pivots 110 are integrally formed. In other examples, the pivots 110 may be separate elements connected to the thrust pads. Further, in additional examples, the pivots may be located between other components of the assembly, e.g. between the actuators 106 and the base 102.

The pivots 110 may comprise a substantially spherical cap shape, but other (curved) geometries are also possible. In further examples, the pivots 110 may be or comprise hinges.

In some examples, the diaphragms may be made of materials that exhibit an elastic response for a large range of strains, such as elastomers. The diaphragms may be made of linear elastic materials, i.e. their elastic coefficients may be independent of stress and strain, or nonlinear elastic materials. The diaphragms may be substantially impermeable to water-based fluids, oil-based fluids, and air.

Figure 7 illustrates a further example of a thrust bearing assembly 100 according to the present disclosure. In this example, the thrust bearing assembly 100 comprises two structural bases 102, 152 configured to be located at a first side and a second side of the thrust collar 15, respectively. Further, in some examples, the thrust bearing assembly 100 may also comprise a housing 130 configured to at least partially enclose the thrust collar 15 of the rotating shaft 14. The housing 130 may extend axially from the first side to the second side of the thrust collar 15. Further, the housing 130 may also enclose the two structural bases 102, 152.

In some examples, the housing 130 may further comprise open fluid conduits configure to distribute lubricant to the thrust pads 104.

According to the invention, the thrust bearing assembly 100 comprises a structural base 102, 152 having a plurality of annular segments 112, 122. The annular segments 112, 122 may facilitate the installation of the thrust bearing assembly 100, e.g. a first annular segment 112 may be installed around a rotating shaft 14, and a second annular segment 122 may be subsequently mounted around the rotating shaft 14 at least partially based on the location and/or orientation of the first annular segment. The annular segments 112, 122, may define any suitable central angle. For example, the annular segments 112, 122 may define a central angle of 180 degrees, such that two annular segments may be combined to form the structural base 102. In other examples, the annular segments 112, 122 may define an annular segment of less than 180 degrees, e.g. 45 degrees. Thus, the structural base 102 may be mounted in a suitable longitudinal location of the rotating shaft 14 without the need of inserting an end of the rotating shaft 14 through the structural base 102 and sliding the structural base 102 along the rotating shat 14 to the desired longitudinal location. Thus, the thrust bearing assembly 100 has a modular structure and may be easily installed in a rotating shaft 14 of an existing or partly assembled rotating machine. For example, the thrust bearing assembly 100 may be installed in a longitudinal location of a rotating shaft between two connections to a bedplate, e.g. between two pillow blocks. The thrust bearing assembly 100 comprising a structural base 102 with two or more annular segments 112, 122 may be manufactured using less complex manufacturing techniques compared with thrust bearing assemblies wherein the transmission of stresses is carried out by mechanical systems.

The construction of bases with having multiple annular segments may also be used in other examples including a single base such as the examples of figures 3 - 6.

In any of the herein disclosed examples, the plurality of thrust pads 104 may consist of an even number of thrust pads 104, which allows connecting the thrust pads 104 in pairs. Further, the plurality of thrust pads 104 may be evenly spaced around the rotating shaft. This may provide a substantially uniform distribution of stresses at the thrust collar 15 and thrust bearing assembly 100.

The thrust bearing assemblies 100 previously disclosed may be configured to be located in any rotating machine. For example, the thrust bearing assemblies 100 may be configured to be located in a steam turbine, in a gas turbine, or in any turbomachinery.

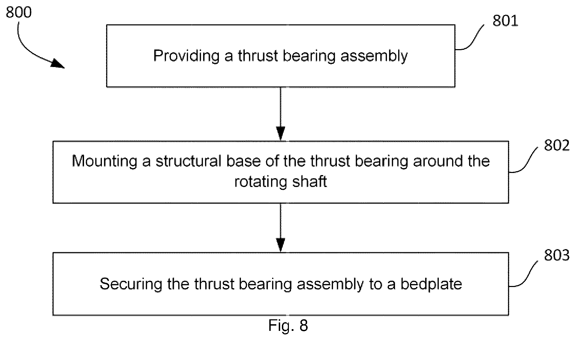

Figure 8 shows a flowchart of an example of a method 800 for installing a thrust bearing assembly 100 in a rotating shaft 14 according to the present disclosure. The thrust bearing assembly 100 can be a thrust bearing assembly according to any of the examples described herein.

The method 800 in figure 8 comprises, at block 801, providing a thrust bearing assembly 100. The thrust bearing assembly 100 comprises a plurality of thrust pads 104 configured to support an axial load of a collar 15 mounted on a rotating shaft 14, wherein the plurality of thrust pads 104 are distributed circumferentially around the rotating shaft 14. Another step may be added for the method after or before any of the above-mentioned steps, i.e., checking that the cavities are connected together for exchange of pressure.

The thrust bearing assembly 100 comprises a structural base 102 configured to carry the thrust pads 104. In addition, the thrust bearing assembly 100 also comprises a plurality of pad actuators 106 controlled by a hydraulic fluid in a hydraulic cavity 108, and configured to position the thrust pads 104 along a direction substantially parallel to a geometric centerline of the turbine, i.e. a direction substantially parallel to a rotational axis of the rotating shaft 14. The method 800 also comprises, at block 802, mounting the structural base 102 around the rotating shaft 14. Further, the method 800, at block 803, comprises securing the thrust bearing assembly 100 to a stationary structure, such as e.g., a bedplate.

In examples, block 802 of method 800 may comprise mounting a first annular base segment 112 and a second annular base segment 122 separately and connecting them to each other.

In examples, the method may comprise connecting hydraulic cavities 108 of at least two pad actuators 106 with one or more hydraulic fluid conduits 120. The hydraulic cavities 108 may form part of different annular base segments. To facilitate the installation process, the connection may be performed after the annular segments 112, 122 are mounted in the rotating shaft 14.

It is noted that all features of the different examples of thrust bearing assemblies 100 described throughout the present disclosure can be included, alone or in combination, in method 800 for installing a thrust bearing assembly 100 in a rotating shaft 14, and *vice versa.*

This written description uses examples to disclose the teaching, including the preferred embodiments, and also to enable any person skilled in the art to practice the teaching, including making and using any devices or systems and performing any incorporated methods. The patentable scope is defined by the claims. Aspects from the various embodiments described, as well as other known equivalents for each such aspects, can be mixed and matched by one of ordinary skill in the art. If reference signs related to drawings are placed in parentheses in a claim, they are solely for attempting to increase the intelligibility of the claim, and shall not be construed as limiting the scope of the claim.

## Claims

1. A thrust bearing assembly (100) for a rotating machine comprising:
a plurality of thrust pads (104) configured to support an axial load of a collar (15) mounted on a shaft (14) of the rotating machine, wherein each thrust pad is surrounded with a cage or a ring;
a structural base (102) configured to carry the thrust pads (104) and to surround the shaft (14);
a plurality of pad actuators (106) configured to position the thrust pads (104), wherein each thrust pad actuator (104) includes a diaphragm; and
a hydraulic system for transferring the axial load between the thrust pads (104), the hydraulic system including:
a plurality of cavities (108) for the hydraulic fluid, wherein said plurality of cavities (108) is connected to the plurality of pad actuators (104) and the plurality of cavities (108) is hydraulically connected for exchanging of pressure generated by movement of the pad actuators (106) due to the axial load,
**characterised in that**
the structural base (102) comprises a plurality of annular segments (112, 122).

2. The thrust bearing assembly of claim 1, wherein the hydraulic connection between the cavities (108) includes conduits (120) for the hydraulic fluid and / or membranes.

3. The thrust bearing assembly of claims 1 - 2, wherein the thrust pad actuators (106) are connected with the thrust pads (104) with pivots (110) for tilting of the thrust pads (104) from an upright position.

4. The thrust bearing assembly of claim 3, wherein the pivots (110) are integrally formed with the thrust pads (104).

5. The thrust bearing assembly of any of claims 1 - 4, wherein the thrust pads (104) are evenly spaced in the structural base (102).

6. A turbomachine comprising a thrust bearing assembly (100) according to any of claims 1 - 5.

7. The turbomachine according to claim 6, wherein the turbomachine is a steam turbine or a gas turbine.

8. A fossil, renewable-energy, combine-cycle or nuclear powerplant including a turbomachine as claimed in any of claims 6-7 or a thrust bearing assembly (100) as claimed in any of claims 1-5.

9. Use of a thrust bearing assembly of any of claims 1-5 for a uniform axial load distribution of an axial load of a rotor of a steam turbine.

10. A method for installing a thrust bearing assembly (100) according to any of claims 1-5 on a rotatable shaft (14), the method comprising:
arranging a first annular base segment (112) and a second annular base segment (122) around the rotatable shaft (14) and connecting the first annular base segment (112) to the second annular base segment (122), wherein
the first and the second annular base segments (112, 122) carry one or more thrust pads (104) configured to support an axial load of a collar (15) mounted on the rotatable shaft (14) and pad actuators (106) for positioning the thrust pads (104), wherein each thrust pad actuator (106) includes a diaphragm, wherein each thrust pad (104) is surrounded with a cage or ring, and wherein
the pad actuators (106) are controlled by a hydraulic fluid in a hydraulic cavity (108), and configured to position the thrust pads (104) along a direction that is substantially parallel to a rotational axis of the rotating shaft (14); the method further comprising
connecting one or more of the hydraulic cavities (108) of the first annular base segment (112) to the hydraulic cavities of the second annular base segment through one or more hydraulic fluid conduits and / or through membranes.

## Patentansprüche

1. Drucklageranordnung (100) für eine rotierende Maschine, umfassend:
eine Vielzahl von Druckstücken (104), die konfiguriert sind, um eine Axiallast eines Bundes (15) abzustützen, der auf einer Welle (14) der rotierenden Maschine montiert ist, wobei jedes Druckstück von einem Käfig oder einem Ring umgeben ist;
eine Strukturbasis (102), die konfiguriert ist, um die Druckstücke (104) zu tragen und um die Welle (14) zu umgeben;
eine Vielzahl von Stückstellgliedern (106), die konfiguriert sind, um die Druckstücke (104) zu positionieren, wobei jedes Druckstückstellglied (104) ein Diaphragma einschließt; und
ein Hydrauliksystem zum Übertragen der Axiallast zwischen den Druckstücken (104), wobei das Hydrauliksystem einschließt:
eine Vielzahl von Hohlräumen (108) für das Hydraulikfluid, wobei die Vielzahl von Hohlräumen (108) mit der Vielzahl von Stückstellgliedern (104) verbunden ist und die Vielzahl von Hohlräumen (108) zum Austauschen von Druck, der durch eine Bewegung der Stückstellglieder (106) aufgrund der Axiallast erzeugt wird, hydraulisch verbunden ist, **dadurch gekennzeichnet, dass** die Strukturbasis (102) eine Vielzahl von ringförmigen Segmenten (112, 122) umfasst.

2. Drucklageranordnung nach Anspruch 1, wobei die hydraulische Verbindung zwischen den Hohlräumen (108) Leitungen (120) für das Hydraulikfluid und / oder Membranen einschließt.

3. Drucklageranordnung nach den Ansprüchen 1 bis 2, wobei die Stückstellglieder (106) mit den Druckstücken (104) über Schwenkzapfen (110) zum Kippen der Druckstücke (104) aus einer aufrechten Position verbunden sind.

4. Drucklageranordnung nach Anspruch 3, wobei die Schwenkzapfen (110) mit den Druckstücken (104) einstückig ausgebildet sind.

5. Drucklageranordnung nach einem der Ansprüche 1 bis 4, wobei die Druckstücke (104) in der Strukturbasis (102) gleichmäßig beabstandet sind.

6. Turbomaschine, umfassend eine Drucklageranordnung (100) nach einem der Ansprüche 1 bis 5.

7. Turbomaschine nach Anspruch 6, wobei die Turbomaschine eine Dampfturbine oder eine Gasturbine ist.

8. Fossiles, Erneuerbare-Energie-, Kombi- oder Kernkraftwerk, das eine Turbomaschine nach einem der Ansprüche 6 bis 7 oder eine Drucklageranordnung (100) nach einem der Ansprüche 1 bis 5 einschließt.

9. Verwendung einer Drucklageranordnung nach einem der Ansprüche 1 bis 5 für eine gleichmäßige Axiallastverteilung einer Axiallast eines Rotors einer Dampfturbine.

10. Verfahren zum Installieren einer Drucklageranordnung (100) nach einem der Ansprüche 1 bis 5 auf einer rotierbaren Welle (14), das Verfahren umfassend:
Anordnen eines ersten ringförmigen Basissegments (112) und eines zweiten ringförmigen Basissegments (122) um die rotierbare Welle (14) herum und Verbinden des ersten ringförmigen Basissegments (112) mit dem zweiten ringförmigen Basissegment (122), wobei
das erste und das zweite ringförmige Basissegment (112, 122) ein oder mehrere Druckstücke (104), die konfiguriert sind, um eine Axiallast eines Bundes (15) abzustützen, der an der rotierbaren Welle (14) montiert ist, und Stückstellglieder (106) zum Positionieren der Druckstücke (104) tragen, wobei jedes Stückstellglied (106) ein Diaphragma einschließt, wobei jedes Druckstück (104) von einem Käfig oder einem Ring umgeben ist und wobei
die Stückstellglieder (106) durch ein Hydraulikfluid in einem Hydraulikhohlraum (108) gesteuert werden und konfiguriert sind, um die Druckstücke (104) entlang einer Richtung zu positionieren, die im Wesentlichen parallel zu einer Rotationsachse der rotierenden Welle (14) ist; das Verfahren ferner umfassend
Verbinden eines oder mehrerer der Hydraulikhohlräume (108) des ersten ringförmigen Basissegments (112) mit den Hydraulikhohlräumen des zweiten ringförmigen Basissegments durch eine oder mehrere Hydraulikfluidleitungen und / oder durch Membranen.

## Revendications

1. Ensemble palier de butée (100) pour une machine tournante comprenant :
une pluralité de patins de poussée (104) conçus pour supporter une charge axiale d'un collier (15) monté sur un arbre (14) de la machine tournante, dans lequel chaque patin de poussée est entouré d'une cage ou d'une bague ;
une base structurelle (102) conçue pour porter les patins de poussée (104) et pour entourer l'arbre (14) ;
une pluralité d'actionneurs de patins (106) conçus pour positionner les patins de poussée (104), dans lequel chaque actionneur de patin de poussée (104) comporte un diaphragme ; et
un système hydraulique permettant de transférer la charge axiale entre les patins de poussée (104), le système hydraulique comportant :
une pluralité de cavités (108) pour le fluide hydraulique, dans lequel ladite pluralité de cavités (108) est reliée à la pluralité d'actionneurs de patins (104) et la pluralité de cavités (108) est reliée de manière hydraulique pour l'échange de pression générée par le mouvement des actionneurs de patins (106) sous l'effet de la charge axiale, **caractérisé en ce que** la base structurelle (102) comprend une pluralité de segments annulaires (112, 122).

2. Ensemble palier de butée selon la revendication 1, dans lequel la liaison hydraulique entre les cavités (108) comporte des conduits (120) pour le fluide hydraulique et/ou des membranes.

3. Ensemble palier de butée selon les revendications 1 à 2, dans lequel les actionneurs de patins de poussée (106) sont reliés aux patins de poussée (104) par des pivots (110) pour le basculement des patins de poussée (104) à partir d'une position verticale.

4. Ensemble palier de butée selon la revendication 3, dans lequel les pivots (110) sont formés d'un seul tenant avec les patins de butée (104).

5. Ensemble palier de butée selon l'une quelconque des revendications 1 à 4, dans lequel les patins de butée (104) sont espacés de façon uniforme dans la base structurelle (102).

6. Turbomachine comprenant un ensemble palier de butée (100) selon l'une quelconque des revendications 1 à 5.

7. Turbomachine selon la revendication 6, dans laquelle la turbomachine est une turbine à vapeur ou une turbine à gaz.

8. Centrale fossile, d'énergie renouvelable, à cycle combiné ou nucléaire comportant une turbomachine selon l'une quelconque des revendications 6 à 7 ou ensemble palier de butée (100) selon l'une quelconque des revendications 1 à 5.

9. Utilisation d'un ensemble palier de butée selon l'une quelconque des revendications 1 à 5 pour une répartition uniforme de charge axiale d'une charge axiale d'un rotor d'une turbine à vapeur.

10. Procédé permettant d'installer un ensemble palier de butée (100) selon l'une quelconque des revendications 1 à 5 sur un arbre rotatif (14), le procédé comprenant :
la disposition d'un premier segment de base annulaire (112) et d'un second segment de base annulaire (122) autour de l'arbre rotatif (14) et la liaison du premier segment de base annulaire (112) au second segment de base annulaire (122), dans lequel
les premier et second segments de base annulaires (112, 122) portent un ou plusieurs patins de poussée (104) conçus pour supporter une charge axiale d'un collier (15) monté sur l'arbre rotatif (14) et des actionneurs de patins (106) pour positionner les patins de poussée (104), dans lequel chaque actionneur de patin de poussée (106) comporte un diaphragme, dans lequel chaque patin de poussée (104) est entouré d'une cage ou d'une bague, et dans lequel
les actionneurs de patins (106) sont commandés par un fluide hydraulique dans une cavité hydraulique (108), et conçus pour positionner les patins de poussée (104) le long d'une direction qui est sensiblement parallèle à un axe de rotation de l'arbre rotatif (14) ; le procédé comprenant en outre
la liaison d'une ou de plusieurs des cavités hydrauliques (108) du premier segment de base annulaire (112) aux cavités hydrauliques du second segment de base annulaire par le biais d'une ou de plusieurs conduits de fluide hydraulique et/ou par le biais de membranes.
